# EUROPEAN PATENT APPLICATION

(11) **EP 3 618 256 A1**
(43) Date of publication of application: **04.03.2020**
(21) Application number: 19751026.6
(22) Date of filing: 26.01.2019
(51) Int. Cl.: H02M 7/487, H02M 7/217

(54) **BRIDGE CIRCUIT FOR INVERTER OR RECTIFIER**

(30) Priority: 09.02.2018 CN 201810132599
(71) Applicant: Huawei Technologies Co. Ltd., Guangdong 518129 (CN)
(72) Inventor: ZHANG, Chuntao, Shenzhen, Guangdong 518129 (CN)
(74) Representative: Grünecker Patent- und Rechtsanwälte PartG mbB
(86) International application number: PCT/CN2019/073278
(87) International publication number: WO 2019/154138

(57) **Abstract**

A bridge circuit for an inverter or a rectifier is provided, and relates to the field of power electronic technologies. The bridge circuit includes a first switch, a second switch, a third switch, and a fourth switch that are mutually connected in series and that are electrically connected between a positive direct current voltage source and a negative direct current voltage source. The first switch and the second switch are connected in anti-parallel with a first diode, and the first switch and the second switch include at least one combined field effect transistor; and the third switch and the fourth switch are connected in anti-parallel with a second diode, and the third switch and the fourth switch include at least one combined field effect transistor. The combined field effect transistor is a high withstand voltage field effect transistor and a low withstand voltage field effect transistor whose sources or drains are electrically connected to each other. Parasitic diodes in the combined field effect transistor are reversely connected in series. Therefore, a path of a freewheeling current in the parasitic diodes is blocked, and a switching loss and a spike voltage caused due to a reverse recovery current are reduced.

## Description

### TECHNICAL FIELD

The present invention relates to the field of power electronic technologies, and in particular, to a bridge circuit.

### BACKGROUND

Pulse width modulation (Pulse Width Modulation, PWM) inverters are widely applied in the power electronic field currently, particularly in fields such as the uninterruptible power supply field, the solar energy inverter field, the wind energy converter field, the motor drive field, and the fuel cell field, where single-phase three-level inverters are applied most widely. In the prior art, in a bridge circuit used for a single-phase three-level inverter, usually, four field effect transistors are used as switches, or four bipolar transistors are respectively connected in anti-parallel with diodes to serve as switches. When a bipolar transistor is connected in anti-parallel with a diode to serve as a switch, there is a defect that component breakdown may be caused because a spike voltage is generated when a quick switch is used. Therefore, a switching frequency is limited and a switching speed is relatively low. When a field effect transistor is used as a switch, although a switching speed is relatively high, because a reverse recovery characteristic of an internal parasitic diode is very poor, when a current freewheels through the parasitic diode, problems such as a switching loss is increased and there is a spike in an output voltage are caused due to a reverse recovery current generated by the parasitic diode. As a result, the output voltage is affected and switch lifetime is reduced.

### SUMMARY

Embodiments of the present invention provide a bridge circuit for an inverter or a rectifier, to reduce a switching loss in a bridge circuit and remove a spike in an output voltage.

To describe the present invention in detail, the following terms, abbreviations, or symbols are used:
FET (Field Effect Transistor): a field effect transistor, which is a voltage-controlled semiconductor device in which majority carriers participate in electrical conduction.
MOSFET (Metal-Oxide-Semiconductor Field-Effect Transistor): metal-oxide semiconductor field-effect transistor.
NMOS (Negative channel MOS): an N-type MOS transistor, which is an n-channel MOS transistor that is provided with a p-type substrate and that transports a current through flowing of electrons.
BJT (Bipolar Junction Transistor): a bipolar junction transistor, which is a current control device formed by combining two PN junctions together.
IGBT (Insulated Gate Bipolar Transistor): an insulated gate bipolar transistor, which is a composite fully-controlled voltage driven power semiconductor device formed by a BJT and a MOS.
PWM (Pulse Width Modulation): pulse width modulation, which is a technology in which a digital output of a microprocessor is used to control an analog circuit.

A semiconductor switch in the embodiments of the present invention may be a high withstand voltage field effect transistor or a combined field effect transistor, where the combined field effect transistor includes a high withstand voltage field effect transistor and a low withstand voltage field effect transistor that are reversely connected in series. To describe the present invention in detail, when the semiconductor switch is a high withstand voltage field effect transistor, a drain of the high withstand voltage field effect transistor is defined as a first end of the semiconductor switch, and a source of the high withstand voltage field effect transistor is defined as a second end of the semiconductor switch. When the semiconductor switch is a combined field effect transistor, in a first electrical connection manner of the combined field effect transistor, a source of a high withstand voltage field effect transistor is electrically connected to a source of a low withstand voltage field effect transistor, a drain of the high withstand voltage field effect transistor is defined as a first end of the semiconductor switch, and a drain of the low withstand voltage field effect transistor is defined as a second end of the semiconductor switch, and in this case, gates of the high withstand voltage field effect transistor and the low withstand voltage field effect transistor are electrically connected to receive an on-off control signal, for example, a PWM signal; and in a second electrical connection manner of the combined field effect transistor, a drain of a high withstand voltage field effect transistor is electrically connected to a drain of a low withstand voltage field effect transistor, a source of the high withstand voltage field effect transistor is defined as a first end of the semiconductor switch, and a source of the low withstand voltage field effect transistor is defined as a second end of the semiconductor switch, and in this case, gates of the high withstand voltage field effect transistor and the low withstand voltage field effect transistor respectively receive on-off control signals, and preferably, the on-off control signals are two control signals, for example, two PWM signals.

A field effect transistor in the embodiments of the present invention may be a MOSFET, a JFET, or another type of bidirectional field effect transistor. An electrical connection in the embodiments of the present invention may be a physical-contact connection, or may be an electrical connection implemented by a resistor, an inductor, a capacitor, or another electron component.

According to a first aspect, an embodiment of the present invention provides a bridge circuit, including:
a first direct current source port, configured to electrically connect to a positive electrode of a first direct current voltage source;
a second direct current source port, configured to electrically connect to a negative electrode of a second direct current source, where a negative electrode of the first direct current voltage source is electrically connected to a positive electrode of the second direct current source;
a first load port, configured to electrically connect to one end of a load circuit;
a second load port, configured to electrically connect to the other end of the load circuit, and electrically connect to the negative electrode of the first direct current voltage source and the positive electrode of the second direct current voltage source;
a first switch, where a first end of the first switch is electrically connected to the first direct current source port;
a second switch, where a first end of the second switch is electrically connected to a second end of the first switch, and a second end of the second switch is electrically connected to the first load port;
a third switch, where a first end of the third switch is electrically connected to the second end of the second switch, and is electrically connected to the first load port;
a fourth switch, where a first end of the fourth switch is electrically connected to a second end of the third switch, and a second end of the fourth switch is electrically connected to the second direct current source port, where
in the first switch and the second switch, one switch is a combined field effect transistor, and the other switch is a combined field effect transistor or a high withstand voltage field effect transistor; and in the third switch and the fourth switch, one switch is a combined field effect transistor, and the other switch is a combined field effect transistor or a high withstand voltage field effect transistor; and
the combined field effect transistor includes a high withstand voltage field effect transistor and a low withstand voltage field effect transistor, and the high withstand voltage field effect transistor is reversely connected in series to the low withstand voltage field effect transistor;
a first diode, where an anode of the first diode is electrically connected to the first load port, and a cathode of the first diode is electrically connected to the first end of the first switch;
a second diode, where an anode of the second diode is electrically connected to the second end of the fourth switch, and a cathode of the second diode is electrically connected to the first load port;
a third diode, where an anode of the third diode is electrically connected to the second load port, and a cathode of the third diode is electrically connected to the first end of the second switch; and
a fourth diode, where an anode of the fourth diode is electrically connected to the first end of the fourth switch, and a cathode of the fourth diode is electrically connected to the second load port.

Because there is at least one combined field effect transistor on each of two paths from the first load port to the first direct current source port and from the second direct current source port to the first load port, a freewheeling current is blocked by parasitic diodes reversely connected in series in the combined field effect transistor, and the freewheeling current needs to flow through the first diode and the second diode that have a relatively good reverse recovery characteristic, so as to avoid a switching loss and a spike voltage that are caused due to a reverse recovery current generated by the parasitic diodes.

In a possible design, the first switch is a combined field effect transistor, the second switch is a combined field effect transistor, the third switch is a combined field effect transistor, and the fourth switch is a combined field effect transistor.

In a possible design, the first switch is a combined field effect transistor, the second switch is a high withstand voltage field effect transistor, the third switch is a high withstand voltage field effect transistor, and the fourth switch is a combined field effect transistor. High withstand voltage field effect transistors are used as the second switch and the third switch, and therefore there is at least one combined field effect transistor on each of the two paths from the first load port to the first direct current source port and from the second direct current source port to the first load port. This ensures that a freewheeling current does not flow through a parasitic diode, and also reduces a quantity of field effect transistors and a size of the bridge circuit.

In a possible design, the first switch is a high withstand voltage field effect transistor, the second switch is a combined field effect transistor, the third switch is a combined field effect transistor, and the fourth switch is a high withstand voltage field effect transistor. Because a working time of the first switch and a working time of the fourth switch in one cycle are longer, a conduction loss can be reduced by using high withstand voltage field effect transistors as the first switch and the fourth switch.

According to a second aspect, an embodiment of the present invention provides a single-phase three-level inverter, including:
the bridge circuit according to any one of all possible implementations of the first aspect;
a first direct current voltage source, where a positive electrode of the first direct current voltage source is electrically connected to the first direct current source port of the bridge circuit, and a negative electrode of the first direct current voltage source is electrically connected to a first junction point;
a second direct current voltage source, where a positive electrode of the second direct current voltage source is electrically connected to the first junction point, and a negative electrode of the second direct current voltage source of the bridge circuit is electrically connected to the second direct current source port; and
a filter circuit, where one end of the filter circuit is electrically connected to the first load port, and the other end of the filter circuit is electrically connected to the first junction point.

In a possible design, the filter circuit includes an inductor and a capacitor connected in series, where one end of the inductor is connected to the first load port; the other end of the inductor is connected to one end of the capacitor; and the other end of the capacitor is connected to the second load port.

Because there is at least one combined field effect transistor on each of two paths from the first load port to the first direct current source port and from the second direct current source port to the first load port, a freewheeling current is blocked by parasitic diodes reversely connected in series in the combined field effect transistor, and the freewheeling current needs to flow through a first diode and a second diode that have a relatively good reverse recovery characteristic, so as to avoid a switching loss and a spike voltage that are caused due to a reverse recovery current generated by the parasitic diodes.

According to a third aspect, an embodiment of the present invention provides a multiphase three-level inverter, including:
a plurality of the bridge circuits in all possible implementations of the first aspect;
a first direct current voltage source, where a positive electrode of the first direct current voltage source is electrically connected to first direct current source ports of the plurality of bridge circuits, and a negative electrode of the first direct current voltage source is electrically connected to first junction points; and
a second direct current voltage source, where a positive electrode of the second direct current voltage source is electrically connected to the first junction point, and a negative electrode of the second direct current voltage source is electrically connected to second direct current source ports of the plurality of bridge circuits.

In the plurality of filter circuits in the possible implementations of the second aspect, one end of each filter circuit is electrically connected to a first load port, and the other end of the filter circuit is electrically connected to a first junction point. Because there is at least one combined field effect transistor on each of two paths from the first load port to the first direct current source port and from the second direct current source port to the first load port, a freewheeling current is blocked by parasitic diodes reversely connected in series in the combined field effect transistor, and the freewheeling current needs to flow through a first diode and a second diode that have a relatively good reverse recovery characteristic, so as to avoid a switching loss and a spike voltage that are caused due to a reverse recovery current generated by the parasitic diodes.

According to a four aspect, an embodiment of the present invention provides a bridge circuit used for a three-level rectifier, including:
a first direct current source port and a second direct current source port, respectively configured to electrically connect to two ends of a load circuit;
a first load port, configured to electrically connect to one end of an alternating current voltage source;
a second load port, configured to electrically connect to the other end of the alternating current voltage source, and electrically connect to an anode of a first diode and a cathode of a second diode;
a first switch, where a first end of the first switch is electrically connected to the first direct current source port;
a second switch, where a first end of the second switch is electrically connected to a second end of the first switch, and a second end of the second switch is electrically connected to the first load port;
a third switch, where a first end of the third switch is electrically connected to the second end of the second switch, and is electrically connected to the first load port;
a fourth switch, where a first end of the fourth switch is electrically connected to a second end of the third switch, and a second end of the fourth switch is electrically connected to the second direct current source port, where
in the first switch and the second switch, one switch is a combined field effect transistor, and the other switch is a combined field effect transistor or a high withstand voltage field effect transistor; and in the third switch and the fourth switch, one switch is a combined field effect transistor, and the other switch is a combined field effect transistor or a high withstand voltage field effect transistor; and
the combined field effect transistor includes a high withstand voltage field effect transistor and a low withstand voltage field effect transistor, and the high withstand voltage field effect transistor is reversely connected in series to the low withstand voltage field effect transistor;
a first diode, where an anode of the first diode is electrically connected to the first load port, and a cathode of the first diode is electrically connected to the first end of the first switch;
a second diode, where an anode of the second diode is electrically connected to the second end of the fourth switch, and a cathode of the second diode is electrically connected to the first load port;
a third diode, where an anode of the third diode is electrically connected to the second load port, and a cathode of the third diode is electrically connected to the first end of the second switch; and
a fourth diode, where an anode of the fourth diode is electrically connected to the first end of the fourth switch, and a cathode of the fourth diode is electrically connected to the second load port.

According to a fifth aspect, an embodiment of the present invention provides a single-phase three-level rectifier, including:
the bridge circuit according to any one of all possible implementations of the fourth aspect; and
an alternating current voltage source, where two ends of the alternating current voltage source are electrically connected to the first load port and the second load port in the bridge circuit respectively.

In a possible design, a withstand voltage of a high withstand voltage field effect transistor is 60 V to 900 V, and is usually 600 V.

In a possible design, a withstand voltage of a low withstand voltage field effect transistor is 20 V to 100 V, and is usually 60 V.

In a possible design, the field effect transistor is a MOSFET, that is, a metal-oxide semiconductor field-effect transistor.

### BRIEF DESCRIPTION OF DRAWINGS

To describe the technical solutions in embodiments of the present invention or in the prior art more clearly, the following briefly describes the accompanying drawings required for describing the embodiments or the prior art.
FIG. 1 is a schematic diagram of a bridge circuit with full MOSFET switches in the prior art;
FIG. 2 is a current-time chart of a reverse recovery current of a diode;
FIG. 3 is a schematic diagram of a bridge circuit according to an embodiment of the present invention;
FIG. 4 is a schematic diagram of a three-level inverter according to an embodiment of the present invention;
FIG. 5 is output-voltage and output-current waveform graphs and a current flow diagram of a three-level inverter according to an embodiment of the present invention;
FIG. 6 is a schematic voltage-time diagram of a first load port N1 of a three-level inverter according to an embodiment of the present invention;
FIG. 7 is a schematic diagram of a bridge circuit for a single-phase three-level inverter according to an embodiment of the present invention;
FIG. 8 is a schematic diagram of still another bridge circuit for a single-phase three-level inverter according to an embodiment of the present invention;
FIG. 9 is a schematic diagram of a three-phase three-level inverter according to an embodiment of the present invention; and
FIG. 10 is a schematic diagram of a single-phase three-level rectifier according to an embodiment of the present invention.

### DESCRIPTION OF EMBODIMENTS

The following clearly and completely describes the technical solutions in the embodiments of the present invention with reference to accompanying drawings in the embodiments of the present invention.

One of most commonly used switching devices in the power electronic field is a field effect transistor (field effect transistor, FET), for example, a most common metal-oxide semiconductor field-effect transistor (Metallic-Oxide-Semiconductor Field-Effect Transistor, MOSFET) and a second most bipolar junction transistor (Bipolar Junction Transistor, BJT) such as a most common insulated gate bipolar transistor (Insulated Gate Bipolar Transistor, IGBT). In the prior art, in a bridge circuit that is applied most widely to a single-phase three-level inverter, an IGBT is used as a switch to control an output waveform. Due to low costs and high reliability, most of manufacturers use this solution currently, particularly a medium-to-large power inverter. However, a spike voltage is generated when an IGBT is used as a quick switch, and component breakdown may be caused. Therefore, a switching frequency is limited and a switching speed is relatively low, and a limitation on the frequency leads to an increase in a size of a filter circuit used as a load circuit, thereby increasing a product size. In addition, some manufacturers use a full-MOSFET solution. Although a MOSFET is switched on relatively quickly, because a reverse recovery characteristic of an internal parasitic diode is very poor, when a current freewheels through the parasitic diode, an additional oscillating current is generated, thereby affecting an output voltage while increasing a switching loss.

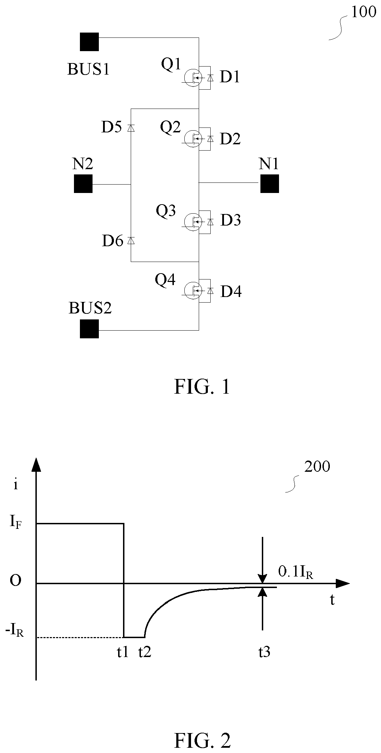

FIG. 1 shows a bridge circuit 100 provided with full MOSFET switches and used for a three-level inverter. The bridge circuit 100 includes four MOSFET switches: Q1, Q2, Q3, and Q4, and two diodes: D5 and D6, where Q1, Q2, Q3, and Q4 respectively include parasitic diodes D1, D2, D3, and D4 that are respectively connected in anti-parallel with Q1, Q2, Q3, and Q4. A positive direct current source port BUS1 and a negative direct current source port BUS2 are respectively configured to electrically connect to a positive direct current voltage source and a negative direct current voltage source to obtain a direct current voltage. A first load port N1 and a second load port N2 are respectively configured to electrically connect to two ends of a load circuit, where the load circuit is usually a filter circuit, and includes a capacitor and an inductor that are connected in series. The second load port N2 may be electrically connected to a neutral line. Four PWM waveforms are respectively input to gates of Q1, Q2, Q3, and Q4, and switch-on and switch-off of all the MOSFET switches are controlled by using the PWM waveforms. When a signal input to a gate is a high level, a MOSFET switch is switched on, and a current may flow from a drain to a source; and when a signal input to a gate is a low level, a MOSFET switch is switched off, and a current cannot flow through the MOSFET switch. A common waveform generator may be used to output the PWM waveforms, so as to control switch-on and switch-off of the four switches. The diodes D5 and D6 provide a path leading to the second load port N2 for a current when the switches Q1 and Q4 are switched off. The parasitic diodes D1, D2, D3, and D4 that are fabricated on the MOSFETs due to a limitation on a fabrication process are used to conduct a freewheeling current from the first load port N1 to the positive direct current source port BUS1 in the bridge circuit 100 and a freewheeling current from the negative direct current source port BUS2 to the first load port N1 in the bridge circuit 100.

FIG. 2 is a current characteristic diagram 200 of a diode. In a stage 0-t₁, the diode is switched on forward, charges in a PN junction are accumulated, and a forward current I_{F} flows in the diode. In a stage t₁-t₂, when a reverse voltage drop occurs on both ends of the diode suddenly, the charges accumulated in the PN junction are released and form a reverse recovery current, and the current in the diode is not cut off immediately, but is first changed from the forward current I_{F} to a very large reverse current I_{R} and maintains for a time period. After t₂, the reverse current decreases gradually and stabilizes at a very small value 0.1 I_{R} after a recovery time period, and the diode enters a reverse cut-off state. A reverse current recovery characteristic of a parasitic diode of a MOSFET is relatively poor, that is, a reverse current I_{R} is relatively large, and a recovery time period t3-t1 is relatively long. Therefore, when a path formed by parasitic diodes D1, D2, D3, and D4 is used as a conduction path for a reverse current, a switch recovery characteristic deteriorates, a switching speed is reduced, and a harmful oscillating current is generated in a bridge circuit.

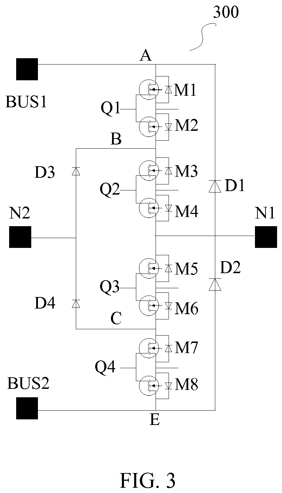

To overcome the foregoing problems, as shown in FIG. 3, an embodiment of the present invention provides a bridge circuit 300. The bridge circuit 300 may be used for a three-level inverter, and includes a semiconductor switch Q1, a semiconductor switch Q2, a semiconductor switch Q3, a semiconductor switch Q4, a diode D1, a diode D2, a diode D3, and a diode D4. In the semiconductor switches Q1, Q2, Q3, and Q4, at least one of Q1 and Q2 is a combined field effect transistor, and at least one of Q3 and Q4 is a combined field effect transistor. In the bridge circuit 300, all the semiconductor switches Q1, Q2, Q3, and Q4 are combined field effect transistors, that is, the semiconductor switch Q1 includes a high withstand voltage field effect transistor M1 and a low withstand voltage field effect transistor M2; the semiconductor switch Q2 includes a high withstand voltage field effect transistor M3 and a low withstand voltage field effect transistor M4; the semiconductor switch Q3 includes a high withstand voltage field effect transistor M5 and a low withstand voltage field effect transistor M6; and the semiconductor switch Q4 includes a high withstand voltage field effect transistor M7 and a low withstand voltage field effect transistor M8. A combined field effect transistor is formed by reversely connecting a high withstand voltage field effect transistor in series to a low withstand voltage field effect transistor. For the combined field effect transistor, there are at least two reverse series connection manners. In a first reverse series connection manner, a source of the high withstand voltage field effect transistor is electrically connected to a source of the low withstand voltage field effect transistor, and gates of the two field effect transistors are electrically connected to serve as a control end of the foregoing semiconductor switch to receive a control signal, for example, a PWM signal; and in a second reverse series connection manner, a drain of the high withstand voltage field effect transistor is electrically connected to a drain of the low withstand voltage field effect transistor, and gates of the two field effect transistors respectively receive two control signals, for example, two PWM signals. The high withstand voltage field effect transistor has a relatively high withstand voltage, that is, a voltage drop that can be withstood between a collector and a source is 60 V to 900 V. In an example, a value of the voltage drop may be 600 V. The low withstand voltage field effect transistor has a relatively low withstand voltage, that is, a voltage drop that can be withstood between a collector and a source is 20 V to 100 V. In an example, a value of the voltage drop may be 60 V.

For convenience of description, in the foregoing first reverse series connection manner, a drain of the high withstand voltage field effect transistor in the combined field effect transistor is used as a first end of the switch, and a drain of the field effect transistor with a low withstand voltage is used as a second end of the switch; and in the foregoing second reverse series connection manner, a source of the high withstand voltage field effect transistor in the combined field effect transistor is used as a first end of the switch, and a source of the low withstand voltage field effect transistor is used as a second end of the switch. In the bridge circuit 300 shown in FIG. 3, an electrical connection point between a first end of the semiconductor switch Q1 and a positive direct current source port BUS1 is used as a junction point A, and an electrical connection point between a second end of the semiconductor switch Q1 and a positive electrode of the semiconductor switch Q2 is used as a junction point B; an electrical connection point between a second end of the semiconductor switch Q2 and a first end of the semiconductor switch Q3 is used as a first load port N1; an electrical connection point between a second end of the semiconductor switch Q3 and a first end of the semiconductor switch Q4 is used as a junction point C; an electrical connection point between a second end of the semiconductor switch Q4 and a negative direct current source port BUS2 is used as a junction point E; a cathode of the diode D1 is electrically connected to the junction point A, and an anode of the diode D1 is electrically connected to the first load port N1; a cathode of the diode D2 is electrically connected to the first load port N1, and an anode of the diode D2 is electrically connected to the junction point E; a cathode of the diode D3 is electrically connected to the junction point B; and an electrical connection point between a cathode of the diode D4 and an anode of the diode D3 is a second load port N2, and an anode of the diode D4 is electrically connected to the junction point C.

The positive direct current source port BUS 1 and the negative direct current source port BUS2 are respectively configured to electrically connect to a positive direct current voltage source and a negative direct current voltage source to obtain a direct current voltage. The first load port N1 and the second load port N2 are respectively connected to two ends of a load circuit, where the load circuit is usually a filter circuit, and the filter circuit usually includes a capacitor and an inductor connected in series.

A field effect transistor in the semiconductor switches Q1, Q2, Q3, and Q4 may be a MOSFET, a JFET, or another type of bidirectional field effect transistor. The diodes D1, D2, D3, and D4 may be common silicon diodes, germanium diodes, or other types of diodes, and the diodes D1 and D2 may be diodes with a relatively good reverse current recovery characteristic.

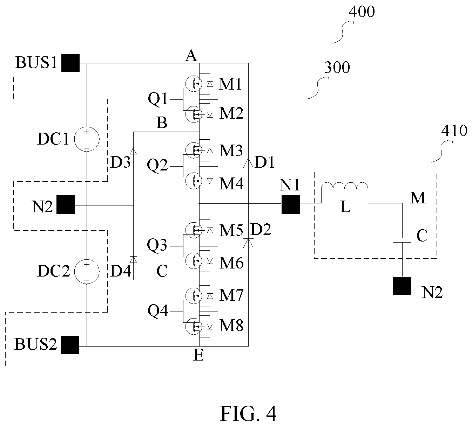

FIG. 4 shows a three-level inverter 400 according to an embodiment of the present invention. The three-level inverter 400 includes a bridge circuit 300, a filter circuit 410, a direct current voltage source DC1 and a direct current voltage source DC2. The filter circuit 410 includes an inductor L and a capacitor C connected in series, where one end of the inductor L is electrically connected to a first load port N1, the other end of the inductor L is electrically connected to the capacitor C at a junction point M, and the other end of the capacitor C is electrically connected to a second load port N2. A positive electrode of the direct current voltage source DC1 is electrically connected to a positive direct current source port BUS1, and a negative electrode of the direct current voltage source DC1 is electrically connected to the second load port N2. A positive electrode of the direct current voltage source DC2 is electrically connected to the second load port N2, and a negative electrode of the direct current voltage source DC2 is electrically connected to a positive direct current source port BUS2. PWM modulation waveforms are controlled to control switch-on and cut-off of the semiconductor switches Q1, Q2, Q3, and Q4, and a sine wave/cosine wave voltage and a sine wave/cosine wave current are output at the junction point M by using the filter circuit 410.

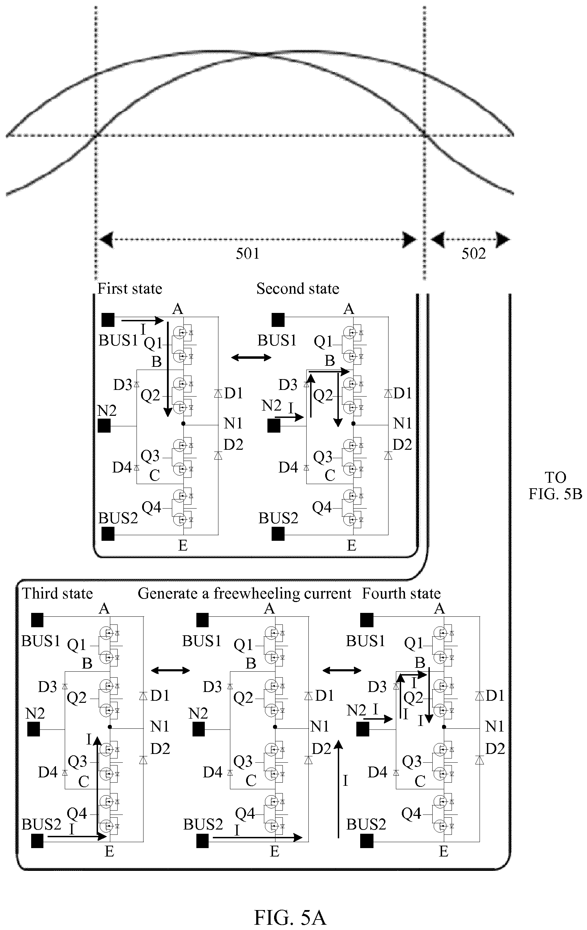

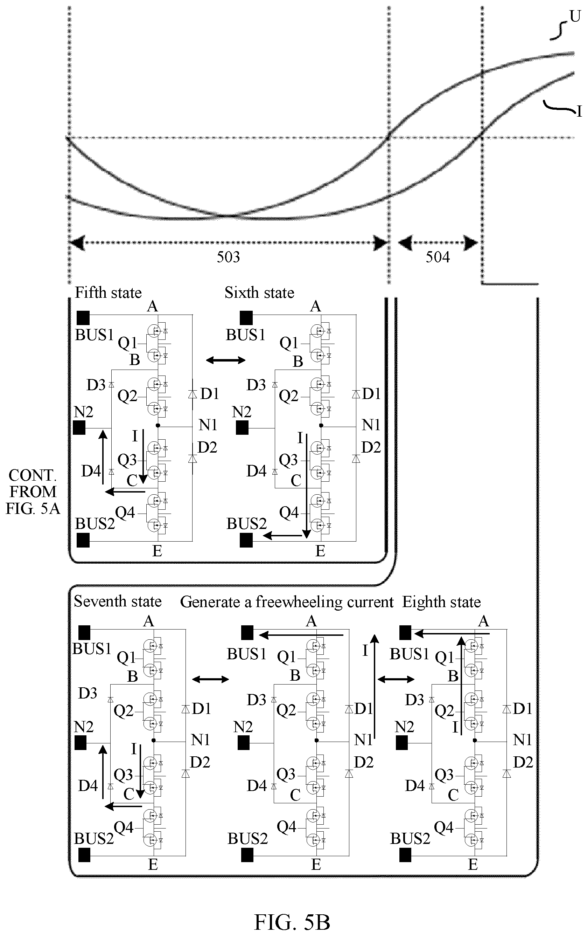

The following further describes a working principle of the single-phase three-level inverter 400 through working status conversion. FIG. 5 is waveform graphs of an output voltage U and an output current I at a junction point M of the inverter 400 in one cycle, and shows current flow directions corresponding to different stages. As shown in FIG. 5, both the output voltage U and the output current I at the junction point M are sine waves, and each has a specific phase difference. Based on whether the output current I is positive or negative and whether the output voltage U is positive or negative, an output waveform may be divided into four stages, and based on a switched-on state of a switch, there may be two statuses for each stage.

In a stage 501 shown in FIG. 5, the output voltage U is positive, the output current I is positive, the semiconductor switch Q4 keeps off, the semiconductor switch Q2 keeps on, and the inverter 400 switches back and forth between a first state and a second state. When the inverter 400 is in the first state, Q1 is switched on, Q3 is switched off, and the current I arrives at the first load port N1 from the positive direct current source port BUS1 through the semiconductor switch Q1 and the semiconductor switch Q2 successively. When the inverter 400 is in the second state, Q3 is switched on, Q1 is switched off, and the current I arrives at the first load port N1 from the second load port N2 through the diode D3 and the semiconductor switch Q2 successively. In a stage 502, the output voltage U is negative, the output current I is positive, the semiconductor switch Q1 keeps off, the semiconductor switch Q3 keeps on, and the inverter 400 switches back and forth between a third state and a fourth state. When the inverter 400 is in the third state, Q4 is switched on, Q2 is switched off, and the current I arrives at the first load port N1 from the negative direct current source port BUS2 through the semiconductor switch Q4 and the semiconductor switch Q3 successively. When the inverter 400 is in the fourth state, Q2 is switched on, Q4 is switched off, and the current I arrives at the first load port N1 from a junction point N through the diode D3 and the semiconductor switch Q2 successively. In a stage 503, the output voltage U is negative, the output current I is negative, the semiconductor switch Q1 keeps off, the semiconductor switch Q3 keeps on, and the inverter 400 switches back and forth between a fifth state and a sixth state. When the inverter 400 is in the fifth state, Q2 is switched on, Q4 is switched off, and the current I arrives at the second load port N2 from the first load port N1 through the semiconductor switch Q3 and the semiconductor switch D4 successively. When the inverter 400 is in the sixth state, Q4 is switched on, Q2 is switched off, and the current I arrives at the negative direct current source port BUS2 from the first load port N1 through the semiconductor switch Q3 and the semiconductor switch Q4 successively. In a stage 504, the output voltage U is positive, the output current I is negative, the semiconductor switch Q4 keeps off, the semiconductor switch Q2 keeps on, and the inverter 400 switches back and forth between a seventh state and an eighth state. When the inverter 400 is in the seventh state, Q3 is switched on, Q1 is switched off, and the current I arrives at the second load port N2 from the first load port N1 through the semiconductor switch Q3 and the diode Q4 successively. When the inverter 400 is in the eighth state, Q1 is switched on, Q3 is switched off, and the current I arrives at the positive direct current source port BUS1 from the first load port N1 through the semiconductor switch Q2 and the semiconductor switch Q1 successively.

In the stage 502, during switching between the third state and the fourth state by the inverter 400, the semiconductor switch Q2 and the semiconductor switch Q4 simultaneously enter a transient cut-off state. In this case, there is still a freewheeling current passing through the inductor L and the capacitor C of the filter circuit 410, and a direction of the freewheeling current is from the negative direct current source port BUS2 to the first load port N1 and then to the second load port N2. If the semiconductor switches Q3 and Q4 are common high-voltage field effect transistors, the freewheeling current arrives at the first load port N1 from the negative direct current source port BUS2 through a parasitic diode of the semiconductor switch Q4 and a parasitic diode of the semiconductor switch Q3, and the parasitic diodes play a role of conducting a current in a short time period. However, due to a reverse current recovery characteristic of the parasitic diode, when a voltage drop at two ends of the parasitic diode changes from positive to negative, there is a reverse current in the parasitic diode for a relatively long time. As a result, a switching speed is reduced, a switching loss is increased, and a harmful oscillating current is generated in the circuit. Because the semiconductor switches Q1, Q2, Q3, and Q4 are all combined field effect transistors, parasitic diodes of two field effect transistors included in each semiconductor switch are actually of a reverse series connection structure, blocking a path of a current in the parasitic diodes, thereby avoiding an electrical problem caused because a reverse current appears in a parasitic diode of a field effect transistor resulting from only using a single field effect transistor as a semiconductor switch in the prior art. A function of conducting a freewheeling current is completed by the diode D2 connected in anti-parallel with Q3 and Q4, that is, a current arrives at the second load port N2 from the negative direct current source port BUS2 through the diode D2 and the filter circuit. A current path formed in the diode D2 connected in anti-parallel with Q3 and Q4 replaces a current path formed in a parasitic diode of a single field effect transistor in the prior art. When a switch is switched on, equivalent on-resistance of a high withstand voltage field effect transistor is relatively large, while equivalent on-resistance of a low withstand voltage field effect transistor is relatively small, and therefore when the switch is switched on, an additional voltage drop generated by connecting in series a field effect transistor with a high withstand voltage can be ignored relative to a voltage drop of the high withstand voltage field effect transistor.

Similarly, in the stage 504, when the inverter 400 switches between the seventh state and the eighth state, the semiconductor switch Q1 and the semiconductor switch Q4 simultaneously enter a transient cut-off state. In this case, a freewheeling current arrives at the positive direct current source port BUS1 from the second load port N2 through the filter circuit 410 and the diode D1. A current path formed in the diode D1 connected in anti-parallel with Q1 and Q2 replaces a current path formed in a parasitic diode of a single field effect transistor in the prior art.

Because the diode D1 and the diode D2 in the inverter 400 have a better reverse current recovery characteristic than a parasitic diode, a relatively small reverse current is generated when the diode D1 and the diode D2 change from on to cut-off, and a recovery time is relatively short, so as to avoid generating an oscillating current in the circuit.

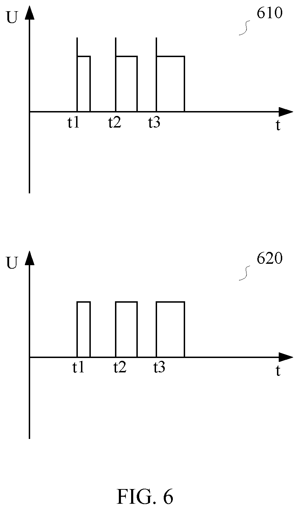

FIG. 6 is voltage-time diagrams of a first load port N1 of a bridge circuit 100 and a first load port N1 of a bridge circuit 300. 610 is a voltage-time diagram of the first load port N1 when a freewheeling current is generated in the bridge circuit 100, where at moments t1, t2, and t3, statuses of switches change from cut-off to on, and spikes appear at rising edges of square waves at the moments t1, t2, and t3. When at least one of switches Q1 and Q2 is a combined field effect transistor and at least one of switches Q3 and Q4 is a combined field effect transistor, 620 is a voltage-time diagram of the first load port N1 when a freewheeling current is generated in the bridge circuit 300, where there is almost no spike at rising edges of square waves at the moments t1, t2, and t3.

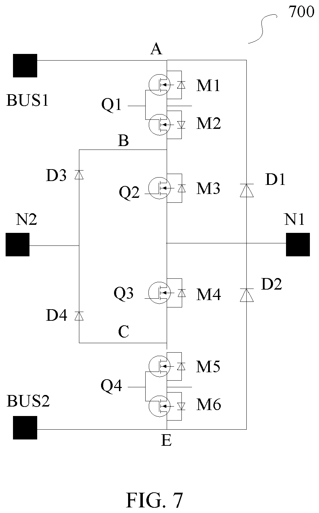

As shown in FIG. 7, an embodiment of the present invention further provides a bridge circuit 700 for a three-level inverter. A circuit structure of the bridge circuit 700 is similar to that of the bridge circuit 300, and a same part thereof is not repeated. A positive direct current source port BUS1 and a negative direct current source port BUS2 are respectively configured to electrically connect to a positive direct current voltage source and a negative direct current voltage source, and a first load port N1 and a second load port N2 are respectively connected to two ends of a filter circuit, so as to implement a function of a single-phase three-level inverter. In the bridge circuit 700, a semiconductor switch Q2 and a semiconductor switch Q3 are replaced with common high withstand voltage field effect transistors. In this way, on a current path from the first load port N1 to the positive direct current voltage port BUS1 or from the negative direct current voltage port BUS2 to the first load port N1, there is still a combined field effect transistor, that is, semiconductor switches Q1 and Q4 shown in FIG. 7. Therefore, when the circuit is in a time period of switching between the third state and the fourth state of the stage 502 shown in FIG. 5, because parasitic diodes of two field effect transistors in the semiconductor switch Q4 are reversely connected in series, a freewheeling current flows through a diode D2. This avoids a related electrical problem caused due to a poor reverse recovery characteristic of an internal parasitic diode of a field effect transistor. When the circuit is in a time period of switching between the seventh state and the eighth state of the stage 504 shown in FIG. 5, because parasitic diodes of two field effect transistors in the semiconductor switch Q1 are reversely connected in series, a current flows through a diode D1. This also avoids a related electrical problem caused due to a poor reverse recovery characteristic of an internal parasitic diode of a field effect transistor. Therefore, compared with the bridge circuit 300 in FIG. 3, the bridge circuit 700 not only has a smaller quantity of field effect transistors needed, but also, but also can resolve a problem of a reverse recovery current in a parasitic diode of a high withstand voltage field effect transistor.

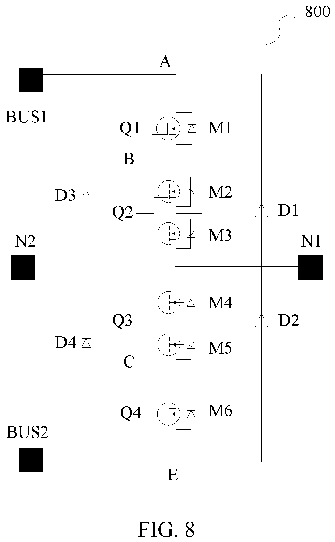

As shown in FIG. 8, an embodiment of the present invention further provides a bridge circuit 800 for a three-level inverter. A circuit structure of the bridge circuit 800 is similar to that of the bridge circuit 300, and a same part thereof is not repeated. A positive direct current source port BUS1 and a negative direct current source port BUS2 are respectively configured to electrically connect to a positive direct current voltage source and a negative direct current voltage source, and a first load port N1 and a second load port N2 are respectively connected to two ends of a filter circuit, so as to implement a function of a single-phase three-level inverter. In the bridge circuit 800, a semiconductor switch Q1 and a semiconductor switch Q4 are replaced with common high withstand voltage field effect transistors, and semiconductor switches Q2 and Q3 are combined field effect transistors. In this way, on a current path from the first load port N1 to the positive direct current voltage port BUS1 or from the negative direct current voltage port BUS2 to the first load port N1, there is still a combined field effect transistor, that is, the semiconductor switches Q1 and Q4 shown in FIG. 8. The bridge circuit 800 avoids a problem of a poor reverse recovery characteristic of a parasitic diode, has a smaller quantity of field effect transistors needed, and further reduces a switching loss.

In a process of outputting voltages in a complete cycle, the inverter undergoes the stage 501, the stage 502, the stage 503, and the stage 504. Duration of the foregoing four stages in the complete cycle is different, where the stage 501 and the stage 503 each occupy a relatively long period of the complete cycle, while the stage 502 and the stage 504 each occupy a relatively short period of the complete cycle. In the stage 501, the semiconductor switch Q2 keeps on, and the semiconductor switch Q4 keeps off, while the semiconductor switch Q1 and the semiconductor switch Q3 are complementarily switched on. A flowing direction of a current is as follows: in a first state, the current arrives at the first load port N1 from the positive direct current source port BUS1 through the semiconductor switch Q1 and the semiconductor switch Q2 successively; in a second state, the current arrives at the first load port N1 from the second load port N2 through a diode D3 and the semiconductor switch Q2 successively. Therefore, the circuit constantly switches between the first state and the second state, and a switch-on loss of the semiconductor switch Q1 is largest. Similarly, in the stage 503, the circuit constantly switches between a fifth state and a sixth state, and a switch-on loss of the semiconductor switch Q4 is largest. A combined field effect transistor includes a high withstand voltage field effect transistor and a low withstand voltage field effect transistor that are connected in series, and therefore in a switch-on/switch-off process, a switch-on loss of the combined field effect transistor is greater than that of the high withstand voltage field effect transistor, causing an energy waste. Therefore, when combined field effect transistors are used as the semiconductor switches Q2 and Q3, and common high withstand voltage field effect transistors are used as the semiconductor switches Q1 and Q4, a switch-on loss can be further reduced.

It should be noted that, description provided in all the embodiments of the present invention not only does not limit a quantity of combined field effect transistors in a bridge circuit, but also does not limit positions of the combined field effect transistors. Actually, in the two switches: the semiconductor switch Q1 and the semiconductor switch Q2, if at least one semiconductor switch is a combined field effect transistor, a current flowing from the first load port N1 to the positive direct current source port BUS1 does not pass through a parasitic diode of the semiconductor switch Q1 or a parasitic diode of the semiconductor switch Q2. Similarly, at least one of the semiconductor switch Q3 and the semiconductor switch Q4 needs to be a combined field effect transistor.

The bridge circuit 300, the bridge circuit 700, and the bridge circuit 800 all can be used for a single-phase three-level inverter circuit, a three-phase three-level inverter circuit, or a multiphase three-level inverter circuit. The bridge circuit 300, the bridge circuit 700, or the bridge circuit 800 may be used as a bridge of a three-phase or multiphase three-level inverter circuit, and an output voltage of the bridge is equivalent to an output voltage of one phase of the three-phase or multiphase three-level inverter circuit.

When any bridge circuit in the embodiments of the present invention is used for another three-level inverter, a positive direct current voltage port BUS1 of the bridge circuit is electrically connected to a positive direct current voltage source; a negative direct current voltage port BUS2 is electrically connected to a negative direct current voltage source; and a first load port N1 and a second load port N2 are respectively connected to two ends of a load circuit, to obtain a sine wave/cosine wave voltage.

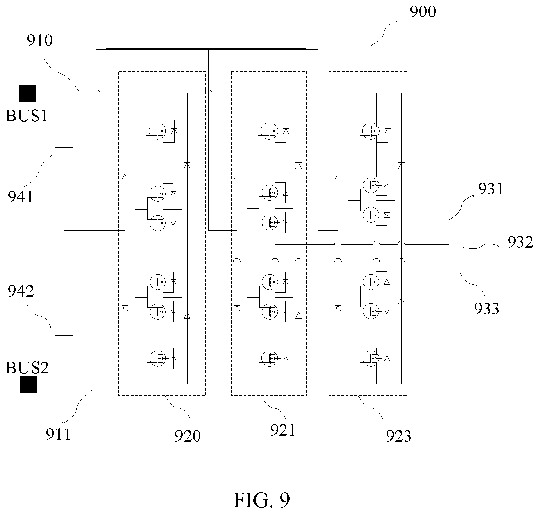

As shown in FIG. 9, an embodiment of the present invention further provides a three-phase three-level inverter 900. A bridge circuit 920, a bridge circuit 921, and a bridge circuit 922 are connected in parallel between a positive side bus 910 extending from a positive direct current voltage port BUS1 and a negative side bus 911 extending from a negative direct current voltage port BUS2; and a first load port in each bridge is used as an output point of this phase, or in other words, three phases are corresponding to output ends 931, 932, and 933. The bridge circuit 920, the bridge circuit 921, and the bridge circuit 922 each may be any bridge circuit provided in the embodiments of the present invention. The positive direct current source port BUS1 and the negative direct current source port BUS2 are respectively configured to electrically connect to a positive direct current voltage source and a negative direct current voltage source to obtain a direct current voltage. The output ends 931, 932, and 933 may be electrically connected to a plurality of filter circuits 410 respectively to obtain sine wave voltages, where one end of each filter circuit 410 is electrically connected to each of the output ends 931, 932, and 933, and the other end of the filter circuit 410 is electrically connected to an electrical connection point between a capacitor 941 and a capacitor 942. Capacitance values of the two capacitors 941 and 942 connected in series may be the same, and this balances a direct current side voltage. The bridge circuit 920, the bridge circuit 921, and the bridge circuit 922 are bridge circuits provided in the embodiments of the present invention. Therefore a switching loss of each bridge is reduced, and problems such as a switching speed is limited due to a reverse recovery current in a parasitic diode and a switch is damaged by a pulse current are avoided.

All the foregoing inverters may be used for an uninterruptible power supply (Uninterruptible Power Supply, UPS) system. In a case of typical load, an inverter in a UPS mainly works in the stage 501 and the stage 503. A combined field effect transistor is used to replace an IGBT or a high withstand voltage MOSFET in the prior art, and therefore the inverter in the UPS has a smaller loss, higher efficiency, and lower costs, and avoids problems such as a switching speed is limited due to a reverse recovery current in a parasitic diode and a switch is damaged by a pulse current.

The bridge circuit in the embodiments of the present invention may also be used for a rectifier. In any bridge circuit in the embodiments of the present invention, a first load port and a second load port are electrically connected to two ends of an alternating current voltage source respectively, so that a direct current voltage output may be obtained between a positive direct current source port BUS1 and a negative direct current source port BUS2.

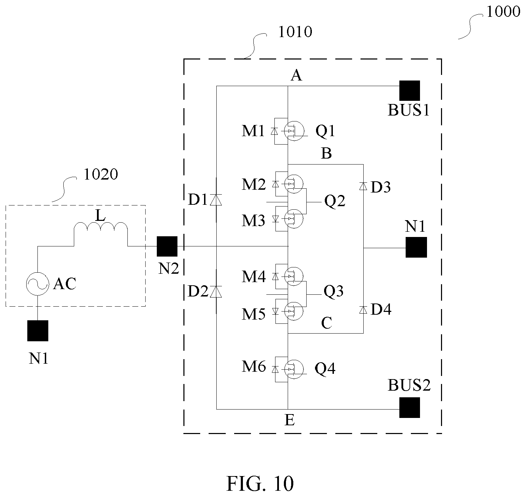

As shown in FIG. 10, an embodiment of the present invention further provides a single-phase three-level rectifier 1000, to implement converting an alternating current voltage to a direct current voltage. The single-phase three-level rectifier 1000 includes a bridge circuit 1010 and an alternating current input circuit 1020, where the bridge circuit 1010 may be any bridge circuit in the embodiments of the present invention. The alternating current input circuit 1020 includes an inductor L and an alternating current voltage source AC that are connected in series. One end of the alternating current input circuit 1020 is electrically connected to a first load port N1, and the other end of the alternating current input circuit 1020 is electrically connected to a second load port N2. A positive direct current source port BUS1 and a negative direct current source port BUS2 are respectively configured to electrically connect to two ends of a load circuit to obtain a direct current voltage output.

Any bridge circuit in the embodiments of the present invention may also be used for another rectifier circuit, for example, a three-phase three-level rectifier, or a multiphase three-level rectifier.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. Abridge circuit, comprising:
a first direct current source port, configured to electrically connect to a positive electrode of a first direct current voltage source;
a second direct current source port, configured to electrically connect to a negative electrode of a second direct current voltage source;
a first load port, configured to electrically connect to one end of a load circuit;
a second load port, configured to electrically connect to the other end of the load circuit, and electrically connect to a negative electrode of the first direct current voltage source and a positive electrode of the second direct current voltage source;
a first switch, wherein a first end of the first switch is electrically connected to the first direct current source port;
a second switch, wherein a first end of the second switch is electrically connected to a second end of the first switch, and a second end of the second switch is electrically connected to the first load port;
a third switch, wherein a first end of the third switch is electrically connected to the second end of the second switch;
a fourth switch, wherein a first end of the fourth switch is electrically connected to a second end of the third switch, and a second end of the fourth switch is electrically connected to the second direct current source port, wherein
in the first switch and the second switch, one switch is a combined field effect transistor, and the other switch is a combined field effect transistor or a high withstand voltage field effect transistor; and in the third switch and the fourth switch, one switch is a combined field effect transistor, and the other switch is a combined field effect transistor or a high withstand voltage field effect transistor; and
the combined field effect transistor comprises a high withstand voltage field effect transistor and a low withstand voltage field effect transistor, and the high withstand voltage field effect transistor is reversely connected in series to the low withstand voltage field effect transistor;
a first diode, wherein an anode of the first diode is electrically connected to the first load port, and a cathode of the first diode is electrically connected to the first end of the first switch;
a second diode, wherein an anode of the second diode is electrically connected to the second end of the fourth switch, and a cathode of the second diode is electrically connected to the first load port;
a third diode, wherein an anode of the third diode is electrically connected to the second load port, and a cathode of the third diode is electrically connected to the first end of the second switch; and
a fourth diode, wherein an anode of the fourth diode is electrically connected to the first end of the fourth switch, and a cathode of the fourth diode is electrically connected to the second load port.

2. The bridge circuit according to claim 1, wherein the first switch is a combined field effect transistor, the second switch is a combined field effect transistor, the third switch is a combined field effect transistor, and the fourth switch is a combined field effect transistor.

3. The bridge circuit according to claim 1, wherein the first switch is a combined field effect transistor, the second switch is a high withstand voltage field effect transistor, the third switch is a high withstand voltage field effect transistor, and the fourth switch is a combined field effect transistor.

4. The bridge circuit according to claim 1, wherein the first switch is a high withstand voltage field effect transistor, the second switch is a combined field effect transistor, the third switch is a combined field effect transistor, and the fourth switch is a high withstand voltage field effect transistor.

5. The bridge circuit according to any one of claims 1 to 4, wherein a withstand voltage of the high withstand voltage field effect transistor is 60 V to 900 V.

6. The bridge circuit according to any one of claims 1 to 5, wherein a withstand voltage of the low withstand voltage field effect transistor is 20 V to 100 V.

7. The bridge circuit according to any one of claims 1 to 6, wherein the field effect transistor is a metal-oxide semiconductor field-effect transistor.

8. A single-phase three-level inverter, comprising:
the bridge circuit according to any one of claims 1 to 7;
a first direct current voltage source, wherein a positive electrode of the first direct current voltage source is electrically connected to the first direct current source port of the bridge circuit, and a negative electrode of the first direct current voltage source is electrically connected to the second load port;
a second direct current voltage source, wherein a positive electrode of the second direct current voltage source is electrically connected to the second load port, and a negative electrode of the second direct current voltage source is electrically connected to the second direct current source port; and
a filter circuit, wherein one end of the filter circuit is electrically connected to the first load port, and the other end of the filter circuit is electrically connected to the second load port.

9. A multiphase three-level inverter, comprising:
a plurality of bridge circuits according to any one of claims 1 to 7 and a plurality of filter circuits in a one-to-one correspondence with the plurality of bridge circuits;
a first direct current voltage source, wherein a positive electrode of the first direct current voltage source is electrically connected to first direct current source ports of the plurality of bridge circuits, and a negative electrode of the first direct current voltage source is electrically connected to second load ports of the plurality of bridge circuits; and
a second direct current voltage source, wherein a positive electrode of the second direct current voltage source is electrically connected to the second load ports of the plurality of bridge circuits, and a negative electrode of the second direct current voltage source is electrically connected to second direct current source ports of the plurality of bridge circuits, wherein
in the plurality of filter circuits, one end of each filter circuit is electrically connected to a first load port of a corresponding bridge circuit, and the other end of the filter circuit is electrically connected to a second load port of the corresponding bridge circuit.

10. Abridge circuit, comprising:
a first direct current source port and a second direct current source port, respectively configured to electrically connect to two ends of a load circuit;
a first load port, configured to electrically connect to one end of an alternating current voltage source;
a second load port, configured to electrically connect to the other end of the alternating current voltage source, and electrically connect to an anode of a first diode and a cathode of a second diode;
a first switch, wherein a first end of the first switch is electrically connected to the first direct current source port;
a second switch, wherein a first end of the second switch is electrically connected to a second end of the first switch, and a second end of the second switch is electrically connected to the second load port;
a third switch, wherein a first end of the third switch is electrically connected to the second end of the second switch;
a fourth switch, wherein a first end of the fourth switch is electrically connected to a second end of the third switch, and a second end of the fourth switch is electrically connected to the second direct current source port, wherein
in the first switch and the second switch, one switch is a combined field effect transistor, and the other switch is a combined field effect transistor or a high withstand voltage field effect transistor; and in the third switch and the fourth switch, one switch is a combined field effect transistor, and the other switch is a combined field effect transistor or a high withstand voltage field effect transistor; and
the combined field effect transistor comprises a high withstand voltage field effect transistor and a low withstand voltage field effect transistor, and the high withstand voltage field effect transistor is reversely connected in series to the low withstand voltage field effect transistor;
a first diode, wherein an anode of the first diode is electrically connected to the first load port, and a cathode of the first diode is electrically connected to the first end of the first switch;
a second diode, wherein an anode of the second diode is electrically connected to the second end of the fourth switch, and a cathode of the second diode is electrically connected to the first load port;
a third diode, wherein an anode of the third diode is electrically connected to the second load port, and a cathode of the third diode is electrically connected to the first end of the second switch; and
a fourth diode, wherein an anode of the fourth diode is electrically connected to the first end of the fourth switch, and a cathode of the fourth diode is electrically connected to the second load port.

11. A single-phase three-level rectifier, comprising:
the bridge circuit according to claim 10, and
an alternating current voltage source, wherein one end of the alternating current voltage source is electrically connected to the first load port, and the other end of the alternating current voltage source is electrically connected to the second load port.
